(19) Europäisches Patentamt
European Patent Office
Office européen des brevets

(11) EP 2 268 754 B1

(12) EUROPÄISCHE PATENTSCHRIFT

(45) Veröffentlichungstag und Bekanntmachung des Hinweises auf die Patenterteilung:
**06.04.2016 Patentblatt 2016/14**

(21) Anmeldenummer: **09732068.3**

(22) Anmeldetag: **09.04.2009**

(51) Int Cl.:
***B08B 3/10*** (2006.01) ***B08B 9/08*** (2006.01)
***C03C 17/32*** (2006.01) ***C09J 7/04*** (2006.01)
***C09J 5/00*** (2006.01) ***C09J 133/08*** (2006.01)

(86) Internationale Anmeldenummer:
**PCT/EP2009/054321**

(87) Internationale Veröffentlichungsnummer:
**WO 2009/127601 (22.10.2009 Gazette 2009/43)**

(54) **VERFAHREN ZUR HERSTELLUNG VON SELBSTKLEBENDEN ARTIKELN**

METHOD FOR PRODUCING SELF-ADHESIVE ITEMS

PROCÉDÉ POUR PRODUIRE DES ARTICLES AUTOCOLLANTS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.04.2008 EP 08154639**

(43) Veröffentlichungstag der Anmeldung:
**05.01.2011 Patentblatt 2011/01**

(73) Patentinhaber: **BASF SE**
**67056 Ludwigshafen am Rhein (DE)**

(72) Erfinder:
- **DRAGON, Andree**
**67346 Speyer (DE)**
- **DIEHL, Heiko**
**67133 Maxdorf (DE)**
- **MÄURER, Ralf**
**67136 Fußgönheim (DE)**
- **FLAMING, Erika**
**67227 Frankenthal (DE)**

(56) Entgegenhaltungen:
**EP-A- 1 520 898**
**GB-A- 1 477 090**
**US-A- 4 396 675**
**US-A- 4 404 246**
**US-A- 5 183 841**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 268 754 B1

## Beschreibung

Gegenstand der vorliegenden Erfindung ist ein Verfahren zum Lösen eines Verbundes aus einem Substrat 1 und einem Substrat 2, dadurch gekennzeichnet, dass der Verbund mit einem wässrigen Medium, welches eine Temperatur ≥ 50 °C und einen pH-Wert ≥ 7,5 aufweist, behandelt wird, wobei der Verbund erhältlich ist durch ein Verfahren zum Verkleben eines selbstklebenden Artikels, wobei die mit Klebstoffformulierung beschichtete Oberfläche des selbstklebenden Artikels mit der Oberfläche eines Substrates 2 in Kontakt gebracht wird und wobei der selbstklebende Artikel erhältlich ist durch ein Verfahren welches dadurch gekennzeichnet ist, dass wenigstens eine Oberfläche eines weichmacherfreien Substrats 1 mit einer Klebstoffformulierung, enthaltend

A) ein durch radikalische Polymerisation erhältliches Polymer A mit einer Glasüber-gangstemperatur ≤ -40 °C (gemessen mittels Differential Scanning Calorimetry, midpoint-Messung, 20 K/min gemäß DIN 53765), welches zu

0,1 bis 15 Gew.-% wenigstens eine ethylenisch ungesättigte $C_3$- bis $C_6$-Mono- oder Dicarbonsäure, deren Amid und/oder ein ethylenisch ungesättigtes Monomer, welches wenigstens eine Hydroxyl- oder Aminogruppe enthält (Monomere A1) und
85 bis 99,9 Gew.-% wenigstens ein weiteres, mit dem wenigstens einen Monomeren A1 radikalisch copolymerisierbares ethylenisch ungesättigtes Monomer (Monomere A2)

in einpolymerisierter Form enthält, wobei sich die Mengen der Monomeren A1 und A2 zu 100 Gew.-% addieren, und
B) ≥ 0,01 und ≤ 3 Gew.-Teile einer Aminotriazinverbindung B, bezogen auf 100 Gew.-Teile an Polymer A.

beschichtet wird und wobei als Substrat 1 Papier eingesetzt wird.

Die Verklebung von Etiketten auf Gegenständen, wie beispielsweise Preisetiketten, Kennzeichnungsetiketten oder Warenzeichenetiketten auf Gegenständen aus natürlichen oder künstlichen Materialien, insbesondere die Etikettierung von Getränkeflaschen aus Glas, Kunststoff oder kunststoffbeschichteten Glas ist dem Fachmann geläufig und erfolgt häufig mittels Klebstoffen auf Caseinbasis.

Dabei wird der wässrige Klebstoff auf Basis von Casein in der Regel zuerst auf die Oberfläche des zu etikettierenden Gegenstands aufgebracht und daran anschließend das Etikett auf die mit Klebstoff beschichtete Gegenstandsoberfläche aufgelegt und der erhaltene Verbund anschließend getrocknet.

Darüber hinaus sind dem Fachmann eine Vielzahl von mit Haftklebstoffen beschichteten Etiketten und deren Verklebung mit Gegenständen bekannt (siehe beispielsweise EP-A 1329492, EP-A 1479744 oder DE-A 10208039). In US 5183841 werden durch Wasser und Alkali ablösbare Haftklebstoffe auf Basis von bestimmten Haftklebstoffpolymeren, Tackifiern und Tensiden beschrieben.

Nachteilig an den im Stand der Technik bei der Etikettierung verwendeten Klebstoffen ist, dass sie im Falle der üblichen Haftklebstoffetiketten nur erschwert auf feuchten Oberflächen applizierbar sind (beispielsweise auf feuchten Getränkeflaschen), im Falle der Verwendung von caseinbasierten Klebstoffen bei Temperaturen ≤ 20 °C in neutralen wässrigen Medien löslich sind (beispielsweise bei der Kühlung von etikettierten Getränkeflaschen in Eiswasser) und/oder sich in wässrigen Medien bei Temperaturen ≥ 50 °C und pH-Werten ≥ 7,5 nicht wieder rückstandsfrei ablösen lassen (beispielsweise bei der Reinigung von gebrauchten etikettierten Getränkeflaschen).

Aufgabe der vorliegenden Erfindung war daher die Bereitstellung eines Verfahrens zur Herstellung von selbstklebenden Artikeln, welche nicht die Nachteile der selbstklebenden Artikel des Standes der Technik aufweisen und welche sich darüber hinaus in wässrigen Medien bei Temperaturen ≥ 50 °C und pH-Werten ≥ 7,5 wieder rückstandsfrei von einem Substrat ablösen lassen.

Überraschender Weise wurde die Aufgabe durch das eingangs definierte Verfahren gelöst.

Zur Herstellung und Verwendung von Mischungen aus einem Polymer A und einem Aminotriazinharz B ist von nachfolgendem Stand der Technik auszugehen.

In der DE-A 4426186 wird die Verwendung von Mischungen als Bindemittel für Lackharze offenbart, welche spezielle Aminotriazinderivate und mit diesen vernetzbaren Polymeren enthalten. Die Verwendung dieser Mischungen als Klebstoffkomponenten wird nicht offenbart.

Die EP-A 1520898 offenbart Mischungen aus Polymeren und Aminotriazinharzen als Haftklebstoffe zur Herstellung von selbstklebenden Weich-PVC-Artikeln. Da die Klebstoffschicht im wässrigen Medium keine oder lediglich geringe Neigung zum Weißanlaufen zeigt, wird dieser eine hohe Wasserbeständigkeit zugeschrieben. Ein Wiederablösen dieser verklebten Artikel im alkalischen wässrigen Medium wird nicht offenbart.

Im erfindungsgemäßen Verfahren wird ein durch radikalische Polymerisation erhältliches Polymer A mit einer Glasübergangstemperatur ≤ -40 °C eingesetzt, welches zu

0,1 bis 15 Gew.-% wenigstens eine ethylenisch ungesättigte $C_3$- bis $C_6$-Mono- oder Dicarbonsäure, deren Amid

und/oder ein ethylenisch ungesättigtes Monomer, welches wenigstens eine Hydroxyl- oder Aminogruppe enthält (Monomere A1) und

85 bis 99,9 Gew.-% wenigstens ein weiteres, mit dem wenigstens einen Monomeren A1 radikalisch copolymerisierbares ethylenisch ungesättigtes Monomer (Monomere A2)

in einpolymerisierter Form enthält.

Als Monomere A1 kommen ethylenisch ungesättigte $C_3$- bis $C_6$-Mono- oder Dicarbonsäuren, insbesondere $C_3$- und $C_4$-Mono- oder Dicarbonsäuren, wie beispielsweise Acrylsäure, Methacrylsäure, Crotonsäure, Fumarsäure, Maleinsäure, 2-Methylmaleinsäure und/oder Itakonsäure, deren Aminde, wie beispielsweise Acrylamid oder Methacrylamid, deren Alkalimetall- oder Ammoniumsalze oder deren Anhydride, wie beispielsweise Maleinsäureanhydrid in Betracht. Als Monomere A1 können ebenfalls alle ethylenisch ungesättigten Monomeren eingesetzt werden, welche wenigstens eine Hydroxylgruppe enthalten, wie beispielsweise Hydroxyalkylacrylate und -methacrylate mit $C_2$- bis $C_{10}$-Hydroxyalkylgruppen, vorteilhaft $C_2$- bis $C_4$-Hydroxyalkylgruppen, wie insbesondere 2-Hydroxyethylacrylat, 2-Hydroxyethylmethacrylat, 3-Hydroxyproplylacrylat, 3-Hydroxypropylmethacrylat, 4-Hydroxybutylacrylat und/oder 4-Hydroxybutylmethacrylat. Ebenso können als Monomere A1 methylolamidgruppenhaltige ethylenisch ungesättigte Verbindungen, wie beispielsweise N-Methylolacrylamid, und/oder N-Methylolmethacrylamid eingesetzt werden. Selbstverständlich sollen auch solche ethylenisch ungesättigten Verbindungen als zu den Monomeren A1 gehörig betrachtet werden, deren funktionelle Gruppen in wässrigem Medium zu Hydroxygruppen reagieren, wie beispielsweise Epoxidgruppen, weswegen auch Monomere wie Glycidylacrylat und -methacrylat von den Monomeren A1 umfasst sind. Als Monomere A1 können ebenfalls alle ethylenisch ungesättigten Monomeren eingesetzt werden, welche wenigstens eine Aminogruppe, bevorzugt eine primäre Aminogruppe, wie beispielsweise Aminoalkylacrylate und -methacrylate mit $C_2$-bis $C_{10}$-Aminoalkylgruppen, vorteilhaft $C_2$- bis $C_4$-Aminoalkylgruppen, wie insbesondere 2-Aminoethylacrylat, 2-Aminoethylmethacrylat, 3-Aminoproplylacrylat, 3-Aminopropylmethacrylat, 4-Aminobutylacrylat und/oder 4-Aminobutylmethacrylat enthalten. Bevorzugte Monomere A1 sind Acrylsäure, Methacrylsäure, Maleinsäureanhydrid, Itakonsäure, 2-Hydroxyethylacrylat, 2-Hydroxyethylmethacrylat, 3-Hydroxyproplylacrylat, und/oder 3-Hydroxypropylmethacrylat. Insbesondere bevorzugt werden als Monomere A1 Acrylsäure und/oder Methacrylsäure eingesetzt.

Die Gesamtmenge an Monomeren A1 beträgt 0,1 bis 15 Gew.-%, bevorzugt 0,5 bis 10 Gew.-% und insbesondere bevorzugt 1 bis 5 Gew.-%, jeweils bezogen auf die Gesamtmenge an Monomeren A1 und A2 (Gesamtmonomerenmenge).

Demnach beträgt die Gesamtmenge an Monomeren A2 85 bis 99,9 Gew.-%, bevorzugt 90 bis 99,5 Gew.-% und insbesondere bevorzugt 95 bis 99 Gew.-%, jeweils bezogen auf die Gesamtmonomerenmenge.

Als Monomere A2 kommen alle diejenigen ethylenisch ungesättigten Monomeren in Betracht, welche sich von den Monomeren A1 unterscheiden und welche mit diesen in einfacher Weise radikalisch copolymerisierbar sind, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyln-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von $\geq$ 80 Gew.-%, bevorzugt $\geq$ 90 Gew.-% und häufig $\geq$ 95 Gew.-% auf sich vereinen. In aller Regel weisen diese Monomeren in Wasser bei Normalbedingungen [20 °C, 1 atm = 1,013 bar (absolut)] lediglich eine mäßige bis geringe Löslichkeit auf.

Monomere A2, die unter den vorgenannten Bedingungen eine erhöhte Wasserlöslichkeit aufweisen, sind solche, die entweder wenigstens Ureido- oder N-heterocyclische Gruppe und/oder deren am Stickstoff protonierten oder alkylierten Ammoniumderivate enthalten. Beispielhaft genannt seien N-Vinylpyrrolidon, 2-Vinylpyridin, 4-Vinylpyridin, 2-Vinylimidazol oder 2-(1-Imidazolin-2-onyl)ethylmethacrylat. Im Normalfall sind die vorgenannten wasserlöslichen Monomeren A2 lediglich als modifizierende Monomere in Mengen von $\leq$ 10 Gew.-%, bevorzugt $\leq$ 5 Gew.-% und insbesondere bevorzugt $\leq$ 3 Gew.-%, bezogen auf die Gesamtmenge an Monomeren A2, enthalten. Mit Vorteil sind jedoch keinerlei solcher Monomere A2 im Polymer A in einpolymerisierter Form enthalten.

Monomere A2, die üblicherweise die innere Festigkeit der Verfilmungen einer Polymermatrix erhöhen, weisen normalerweise wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinyl-methacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang auch von Bedeutung sind Verbindungen, wie Diacetonacrylamid und Acetylacetoxyethylacrylat bzw. -methacrylat. Häufig werden die vorgenannten vernetzenden Monomeren A2 in Mengen von ≤ 10 zu Gew.-%, bevorzugt in Mengen von ≤ 5 Gew.-% und insbesondere bevorzugt in Mengen von ≤ 3 Gew.-%, jeweils bezogen auf die Gesamtmenge an Monomeren A2, eingesetzt. Häufig sind jedoch keinerlei solcher Monomere A2 im Polymer A in einpolymerisierter Form enthalten.

Vorteilhaft ist das Polymer A zu ≥ 80 Gew.-% und insbesondere vorteilhaft zu ≥ 85 Gew.-% aus $C_1$- bis $C_{20}$-, bevorzugt $C_1$- bis $C_{10}$- und insbesondere $C_1$- bis $C_8$-Alkylacrylaten und/oder -methacrylaten in einpolymerisierter Form aufgebaut ist. Mit besonderem Vorteil enthält das Polymer A als Hauptmonomer n-Butylacrylat, n-Hexylacrylat, 2-Ethylhexylacrylat und/oder 2-Propylheptylacrylat in einpolymerisierter Form.

Mit besonderem Vorteil ist das Polymer A zu ≥ 85 Gew.-% aus 2-Ethylhexylacrylat, ≥ 0,1 und ≤ 10 Gew.-% Vinylacetat und ≥ 0,1 und ≤ 5 Gew.-% Acrylsäure in einpolymerisierter Form aufgebaut.

Erfindungsgemäß wesentlich ist, dass das Polymer A eine Glasübergangstemperatur Tg ≤ -40 °C, vorteilhaft ≤ -50 °C und insbesondere vorteilhaft ≤ -55 °C aufweist. Dabei ist mit der Glasübergangstemperatur Tg, der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Als Glasübergangstemperatur Tg ist im Rahmen dieser Schrift diejenige Glasübergangstemperatur gemeint, welche nach dem DSC-Verfahren (Differential Scanning Calorimetry, 20 K/min, midpoint-Messung, DIN 53765) ermittelt wurde.

Durch die sogenannte Foxgleichung ist es dem Fachmann möglich, Polymere A im geeigneten Tg-Bereich zu identifizieren und diese durch geeignete Variation von Art und Menge der Monomeren A1 und A2 gezielt herzustellen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die Herstellung der Polymeren A an sich ist unkritisch und dem Fachmann prinzipiell geläufig. Sie erfolgt im Wesentlichen durch radikalisch initiierte Polymerisation der Monomeren A1 und A2. Dabei kann die radikalische Polymerisation der Monomeren A1 und A2 in Substanz (Substanzpolymerisation), in einem organischen Lösungsmittel (Lösungspolymerisation) oder emulgiert in einem wässrigen Medium (wässrige Emulsions- oder Suspensionspolymerisation) erfolgen. Bevorzugt erfolgt die Herstellung des Polymeren A durch radikalisch initiierte Emulsionspolymerisation der Monomeren A1 und A2 in wässrigem Medium, wie sie beispielsweise in der EP-A 1520898 Abschnitte 36 bis 62 offenbart ist.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines wasserlöslichen radikalischen Polymerisationsinitiators polymerisiert. Von dieser allgemeinen Verfahrensweise unterscheidet sich die Herstellung der Polymere A lediglich im Einsatz der voran genannten spezifischen Monomeren A1 und A2.

Bei der Herstellung des erfindungsgemäß eingesetzten Polymers A können die Monomeren A1 und A2 einzeln als separate Einzelströme parallel oder nacheinander oder mit Vorteil gemeinsam als Monomerengemisch, insbesondere

in Form einer wässrigen Monomerenemulsion eingesetzt werden.

Die Auslösung der radikalisch initiierten Polymerisationsreaktion bei der Herstellung des erfindungsgemäß eingesetzten Polymers A erfolgt mittels eines dem Fachmann für die wässrige Emulsionspolymeriation geläufigen radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kaliumoder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natrium-metabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Die Polymerisationsreaktion erfolgt dabei unter Temperatur- und Druckbedingungen, unter denen die radikalisch initiierte wässrige Emulsionspolymerisation mit ausreichender Polymerisationsgeschwindigkeit verläuft; sie ist dabei insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit ≤ 3 Stunden, insbesondere vorteilhaft ≤ 1 Stunde und ganz besonders vorteilhaft ≤ 30 Minuten aufweist.

Erfindungsgemäß ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator während der Polymerisationsreaktion zuzudosieren. Die Gesamtmenge oder die gegebenenfalls verbliebene Restmenge an Radikalinitiator kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Radikalinitiator während der Polymerisationsreaktion kontinuierlich mit gleichbleibendem Mengenstrom - insbesondere in Form einer wässrigen Lösung des Radikalinitiators.

Abhängig vom gewählten Radikalinitiator kommt als Reaktionstemperatur für die radikalische initiierte wässrige Emulsionspolymerisation der gesamte Bereich von 0 bis 170 °C in Betracht. Dabei werden in der Regel Temperaturen von 50 bis 120 °C, insbesondere 60 bis 110 °C und vorteilhaft 70 bis 100 °C angewendet. Die erfindungsgemäße radikalische initiierte Polymerisationsreaktion kann bei einem Druck kleiner, gleich oder größer 1 atm (1,013 bar absolut) durchgeführt werden, so dass die Polymerisations-temperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Polymerisationsreaktionen im Unterdruck durchgeführt, werden Drücke von 950 mbar, häufig von 900 mbar und oft 850 mbar (absolut) eingestellt. Vorteilhaft wird die erfindungsgemäße radikalische initiierte Polymerisation bei 1 atm (absolut) unter Inertgasatmosphäre, wie beispielsweise unter Stickstoff oder Argon durchgeführt.

Bei der Herstellung des erfindungsgemäß verwendeten Polymers A durch radikalisch initiierte wässrige Emulsionspolymerisation werden häufig Dispergierhilfsmittel mitverwendet, die sowohl die Monomerentröpfchen als auch die durch die radikalisch initiierte Polymerisation erhaltenen Teilchen des Polymers A in der wässrigen Phase dispers verteilt halten und so die Stabilität der erzeugten wässrigen Polymerisatdispersion gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Vorteilhaft werden jedoch als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger

Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel (I)

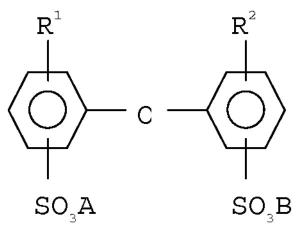

Formel I

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Bevorzugt werden zur Herstellung des Polymers A ausschließlich nichtionische und/oder anionische Emulgatoren verwendet.

In der Regel beträgt die Menge an eingesetztem Dispergierhilfsmittel, insbesondere Emulgatoren, 0,1 bis 10 Gew.-%, bevorzugt 1 bis 5 Gew.-%, jeweils bezogen auf die Gesamtmonomerenmenge.

In der Regel erfolgt die Herstellung des erfindungsgemäß verwendeten Polymers A vorteilhaft dergestalt, dass in einem Polymerisationsgefäß bei 20 bis 25 °C (Raumtemperatur) und Atmosphärendruck unter Inertgasatmospäre wenigstens eine Teilmenge des verwendeten entionisierten Wassers, gegebenenfalls eine Teilmenge des Radikalinitiators, des Dispergierhilfsmittels und der Monomeren A1 und A2 vorgelegt werden, daran anschließend das Vorlagengemisch unter Rühren auf die geeignete Polymerisationstemperatur aufgeheizt wird und danach die gegebenenfalls verbliebene Restmenge oder die Gesamtmenge des Radikalinitiators, Dispergierhilfsmittels und der Monomeren A1 und A2 dem wässrigen Polymerisationsgemisch unter Polymerisationsbedingungen zudosiert werden.

Die erhaltenen wässrigen Polymerisatdispersionen weisen üblicherweise Polymerfeststoffgehalte an Polymer A von $\geq$ 10 und $\leq$ 70 Gew.-%, häufig $\geq$ 20 und $\leq$ 65 Gew.-% und oft $\geq$ 40 und $\leq$ 60 Gew.-%, jeweils bezogen auf die wässrige Polymerisatdispersion, auf. Der über quasielastische Lichtstreuung (ISO-Norm 13321) ermittelte zahlenmittlere Teilchendurchmesser der Emulsionspolymerisate A (cumulant z-average) liegt in der Regel zwischen 10 und 2000 nm, vorteilhaft zwischen 20 und 1000 nm und insbesondere vorteilhaft zwischen 50 und 700 nm bzw. 80 bis 400 nm.

Selbstverständlich können bei der Herstellung des Polymers A durch radikalisch initiierte wässrige Emulsionspolymerisation auch weitere, dem Fachmann geläufige optionale Hilfsstoffe, wie beispielsweise sogenannte Verdicker, Entschäumer, Neutralisationsmittel, Puffersubstanzen, Konservierungsmittel, radikalkettenübertragende Verbindungen und/oder anorganische Füllstoffe eingesetzt werden.

Neben dem Polymer A enthält die im erfindungsgemäßen Verfahren verwendete Klebstoffformulierung noch $\geq$ 0,01 und $\leq$ 3 Gew.-Teile, bevorzugt $\geq$ 0,1 und $\leq$ 2 Gew.-Teile und insbesondere bevorzugt $\geq$ 0,5 und $\leq$ 1,5 Gew.-Teile einer Aminotriazinverbindung B, jeweils bezogen auf 100 Gew.-Teile an Polymer A.

Als Aminotriazinverbindungen B in Betracht kommen z.B. Melamin, Benzoguanamin, Acetoguanamin und Bisguanamine wie Adipo-, Glutaro- oder Methylglutarobisguanamin und Spiroguanamine. In Betracht kommen auch Verbindungen, welche mehrere, z.B. kondensierte, Aminotriazinkerne enthalten. Die Aminotriazinverbindungen sind vorzugsweise zumindest teilweise methyloliert und verethert.

Bevorzugt ist zumindest teilweise methyloliertes und verethertes Melamin und entsprechende Verbindungen,

welche mehrere Melaminkerne, z.B. 2 bis 5 über Methylolgruppen verbrückte Melamine enthalten, oder deren Gemische. Bevorzugte Aminotriazine enthalten im Mittel 1 bis 3, insbesondere 1 Melaminkern je Molekül.

Die Aminotriazine sind im Mittel mit mindestens 1 Mol, vorzugsweise mindestens 1,4 Mol, besonders bevorzugt mit mindestens 1,7 Mol Formaldehyd pro Val primärer Aminogruppen methyloliert und diese Methylolgruppen im Mittel mit mindestens 0,5 Mol, vorzugsweise mindestens 0,6 Mol und besonders bevorzugt mit mindestens 0,7 Mol primären Alkoholen pro Val Methylolgruppe verethert. Hierfür bevorzugte primäre Alkohole sind insbesondere $C_1$-$C_4$-Alkanole. Besonders bevorzugt ist Methanol.

Eine geeignete Aminotriazinverbindung B ist z.B. Hexamethoxymethylolmelamin (jede Aminogruppe des Melamins ist mit 2 Formaldehydgruppen methyloliert, jede Methylolgruppe mit Methanol verethert).

Bevorzugte Aminotriazinverbindungen B haben eine Wasserlöslichkeit von mindestens 500 g/Liter Wasser (21 °C, 1 atm = 1,013 bar absolut).

Die Aminotriazinverbindungen B werden häufig in Form ihrer wässrigen Lösungen eingesetzt. Entsprechende Produkte sind dem Fachmann geläufig und beispielsweise unter dem Markennamen Luwipal® 073 oder Saduren® 163 (Produkte der Fa. BASF SE) am Markt frei käuflich verfügbar.

Die im erfindungsgemäßen Verfahren verwendete Klebstoffformulierung kann Polymer A und Aminotriazinverbindung B ohne weitere Lösungsmittel in Substanz enthalten. Die Klebstoffformulierung kann jedoch auch Polymer A und Aminotriazinverbindung B in Form einer organischen Lösung, Polymer A in Form einer organischen Lösung und Aminotriazinverbindung B in Form einer wässrigen Lösung oder Polymer A in Form einer wässrigen Polymerdispersion und Aminotriazinverbindung B in Form einer wässrigen Lösung enthalten.

Werden sowohl das Polymer A wie auch die Aminotriazinverbindung B in Form einer organischen Lösung oder lediglich das Polymer A in Form einer organischen Lösung eingesetzt, weil beispielsweise Polymer A durch eine Lösungspolymerisation erhalten wurde oder weil das in Substanz hergestellte Polymer A bzw. die Aminotriazinverbindung B in einem Lösungsmittel gelöst wurde, so können als Lösungsmittel prinzipiell aprotische oder protische organische Lösungsmittel eingesetzt werden, wobei aprotische Lösungsmittel insbesondere bevorzugt sind.

Als aprotische organische Lösungsmittel kommen alle organischen Lösemittel in Frage, welche bei 20 bis 25 °C (Raumtemperatur) kein ionisierbares Proton im Molekül enthalten bzw. einen pKs-Wert aufweisen, welcher größer als der von Wasser ist. Beispiele für derartige Lösungsmittel sind aromatische Kohlenwasserstoffe, wie Toluol, o-, m-, p-Xylol und Isomerengemische sowie Ethylbenzol, lineare oder cyclische aliphatische Kohlenwasserstoffe, wie Pentan, Hexan, Heptan, Octan, Nonan, Dodecan, Cyclohexan, Cyclooctan, Methylcyclohexan, sowie Mischungen der genannten Kohlenwasserstoffe und Benzinfraktionen, welche keine polymerisierbaren Monomeren enthalten, aliphatische oder aromatische Halogenkohlenwasserstoffe, wie Chloroform, Tetrachlorkohlenstoff, Hexachlorethan, Dichlorethan, Tetrachlorethan, Chlorbenzol sowie flüssige $C_1$- bzw. $C_2$-Fluorchlorkohlenwasserstoffe, aliphatische $C_2$- bis $C_5$-Nitrile, wie Acetonitril, Propionitril, Butyronitril oder Valeronitril, lineare oder cyclische aliphatische $C_3$-bis $C_7$-Ketone, wie Aceton, Methylethylketon, Methylisobutylketon, 2- bzw. 3-Hexanon, 2-, 3- bzw. 4-Heptanon, Cyclopentanon, Cyclohexanon, lineare oder cyclische aliphatische Ether, wie Diisopropylether, 1,3- oder 1,4-Dioxan, Tetrahydrofuran oder Ethylenglykoldimethylether, Carbonate, wie Diethylcarbonat sowie Ester aus aliphatischen $C_1$- bis $C_5$-Carbonsäuren oder aromatischen Carbonsäuren mit aliphatischen $C_1$- bis $C_5$-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, Buttersäure-n-butylester, Buttersäureisobutylester, Buttersäure-tert.-butylester, Buttersäureamylester, Valeriansäuremethylester, Valeriansäureethylester, Valeriansäure-n-propylester, Valeriansäureisopropylester, Valeriansäure-n-butylester, Valeriansäureisobutylester, Valeriansäure-tert.-butylester, Valeriansäureamylester, Benzoesäuremethylester oder Benzoesäureethylester sowie Lactone, wie Butyrolacton, Valerolacton oder Caprolacton.

Werden die Polymere A durch Lösungspolymerisation hergestellt, so werden vorzugsweise jedoch solche aprotischen organischen Lösungsmittel ausgewählt, in welchen sich die jeweils eingesetzten Radikalinitiatoren gut lösen. Insbesondere werden solche aprotischen organischen Lösemittel eingesetzt, in denen sich neben den Radikalinitiatoren auch das Polymer A gut lösen. Bevorzugte Beispiele hierfür sind Ester aus aliphatischen $C_1$- bis $C_5$-Carbonsäuren oder aromatischen Carbonsäuren mit aliphatischen $C_1$- bis $C_5$-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester, Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, lineare oder cyclische

aliphatische Ether, wie Diisopropylether, 1,3- oder 1,4-Dioxan, Tetrahydrofuran oder Ethylenglykoldimethylether, Methylglycolacetat, Diethylcarbonat, lineare oder cyclische aliphatische $C_3$- bis $C_7$-Ketone, wie Aceton, Methylethylketon, Methylisobutylketon, 2-bzw. 3-Hexanon, 2-, 3- bzw. 4-Heptanon, Cyclopentanon, oder Cyclohexanon. Besonders bevorzugte Lösungsmittel sind die genannten Ester aus aliphatischen $C_1$- bis $C_5$-Carbonsäuren oder aromatischen Carbonsäuren mit aliphatischen $C_1$- bis $C_5$-Alkoholen, insbesondere jedoch Essigsäureethylester und Buttersäureethylester sowie $C_4$- bis $C_6$-Ketone, insbesondere Methylethylketon. Vorteilhaft ist es, wenn das Lösungsmittel bei Atmosphärendruck (1 atm = 1,013 bar absolut) einen Siedepunkt ≤ 100 °C, insbesondere vorteilhaft ≤ 80 °C und besonders vorteilhaft ≤60 °C aufweist. Selbstverständlich kann auch eine Mischung mehrerer Lösungsmittel eingesetzt werden.

Mit besonderem Vorteil wird jedoch Polymer A in Form einer wässrigen Polymerdispersion und Aminotrianzinverbindung B in Form einer wässrigen Lösung eingesetzt, weswegen eine wässrige Klebstoffformulierung vorliegt, welche in Summe ≤ 5 Gew.-% und vorteilhaft ≤ 1 Gew.-% der vorgenannten organischen Lösungsmittel enthält. In einer bevorzugten Ausführungsform enthält die erfindungsgemäß verwendete wässrige Klebstoffformulierung kein organisches Lösungsmittel.

Die Herstellung der Klebstoffformulierung durch Mischen von Polymer A und Aminotriazinverbindung B ist unkritisch und kann prinzipiell in beliebiger Reihenfolge erfolgen, insbesondere dann, wenn Polymer A in Form einer wässrigen Polymerdispersion und Aminotrianzinverbindung B in Form einer wässrigen Lösung eingesetzt werden. Bevorzugt wird jedoch die wässrige Lösung der Aminotriazinverbindung B zur wässrigen Dispersion des Polymeren A gegeben. Die dabei erhaltenen wässrigen Mischungen können für sich schon als wässrige Klebstoffformulierungen eingesetzt werden. Wesentlich ist, dass diese wässrigen Klebstoffformulierungen lange zuverlässig verarbeitbar sind. So beträgt beispielsweise die Topfzeit (Zeit, während der die wässrige Klebstoffformulierung verarbeitbar bleibt) bei 50 °C mehr als 3 Tage und bei Raumtemperatur mehrere Monate.

Handelt es sich um eine wässrige Klebstoffformulierung (wässrige Dispersion von Polymer A und wässrige Lösung von Aminotriazinverbindung B; Gesamtmenge an organischen Lösungsmitteln ≤ 5 Gew.-%, bevorzugt ≤ 3 Gew.-% und insbesondere bevorzugt ≤ 1 Gew.-%, jeweils bezogen auf die wässrige Klebstoffformulierung), so beträgt der Gehalt an Polymer A und Aminotriazinverbindung B in Summe ≤ 10 und ≤ 70 Gew.-%, bevorzugt ≥ 20 und ≤ 65 Gew.-% und insbesondere bevorzugt ≥ 45 und ≤ 60 Gew.-%, jeweils bezogen auf die wässrige Klebstoffformulierung.

Handelt es sich dagegen um eine Klebstoffformulierung auf Basis von organischen Lösungsmitteln (beispielsweise Polymer A gelöst in organischem Lösungsmittel, Aminotriazinverbindung gelöst in Wasser oder organischen Lösungsmittel; Gesamtwassermenge ≤ 5 Gew.-%, bevorzugt ≤ 3 Gew.-% und insbesondere bevorzugt ≤ 1 Gew.-%, jeweils bezogen auf die Klebstoffformulierung auf Basis von organischen Lösungsmitteln) so beträgt der Gehalt an Polymer A und Aminotriazinverbindung B in Summe ≥ 5 und ≤ 60 Gew.-%, bevorzugt ≥ 10 und ≤ 50 Gew.-% und insbesondere bevorzugt ≥ 30 und ≤ 40 Gew.-%, jeweils bezogen auf die Klebstoffformulierung auf Basis von organischen Lösungsmitteln.

Neben den vorgenannten Komponenten Polymer A und Aminotriazinharz B können die Klebstoffformulierungen optional noch weitere, dem Fachmann geläufige Zusatzstoffe enthalten, wie beispielsweise Füllstoffe, Farbstoffe, Verlaufsmittel, Netzmittel, Verdicker oder Tackifier.

In einer Ausführungsform enthält die im erfindungsgemäßen Verfahren verwendete Klebstoffformulierungen insbesondere Tackifier, d.h. wenigstens ein klebrigmachendes Harz zugesetzt. Tackifier sind beispielsweise aus Adäsive Age, Juli 1987, Seiten 19 bis 23 oder Polym. Mater. Sci. Eng. 61 (1989), Seiten 588 bis 592, bekannt.

Tackifier sind z.B. Naturharze, wie Kolophoniumharze und deren durch Disproportionierung oder Isomerisierung, Polymerisation, Dimerisation oder Hydrierung entstehenden Derivate. Diese können in ihrer Salzform (mit z.B. ein- oder mehrwertigen Gegenionen [Kationen]) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol (Glyzerin) oder Pentaerythrit.

Desweiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, $\alpha$-Methylstyrol oder Vinyltoluole Verwendung.

Als Tackifier werden zunehmend auch Polyacrylate, welche ein niedriges Molekulargewicht aufweisen, verwendet. Vorzugsweise haben diese Polyacrylate ein gewichtsmittleres Molekulargewicht unter 30.000 g/mol. Die Polyacrylate bestehen bevorzugt zu mindestens 60, insbesondere mindestens 80 Gew.-% aus $C_1$-$C_8$-Alkylacrylaten oder -methacrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gesamtmenge an Tackifier in der Klebstoffformulierung beträgt ≤ 100 Gew.-%, oft 5 bis 80 Gew.-% und häufig 10 bis 50 Gew.-%, jeweils bezogen auf die Gesamtmenge des Polymerisats A (fest/fest).

Abhängig von Verwendungszweck, enthalten die Klebstoffformulierungen häufig jedoch keinerlei Tackifier, insbesondere beim Vorliegen wässriger Klebstoffformulierungen, sondern neben dem Polymer A und dem Aminotriazinharz B lediglich noch ein dem Fachmann geläufiges Netzmittel, insbesondere auf Succinatbasis.

Als Substrate 1 kommen beispielsweise gestrichenes oder geleimtes, bedrucktes oder unbedrucktes Papier sowie entsprechende Pappe oder Karton in Betracht. Als Substrat 1 wird jedoch bevorzugt gestrichenes oder geleimtes und bedrucktes Papier, insbesondere in Form von Kennzeichnungs- und/oder Preisetiketten eingesetzt. Besonders bevorzugt ist Papier mit einem Flächengewicht von $\geq 50$ und $\leq 200$ g/m$^2$ und insbesondere bevorzugt $\geq 70$ und $\leq 100$ g/m$^2$.

Dabei ist dem Fachmann geläufig, dass Weichmacher ausschließlich zur Weichmachung von Kunststoffen eingesetzt werden.

Demnach sollen die im Rahmen dieser Erfindung als Substrate 1 eingesetzten Kunststoffe, insbesondere thermoplastische oder duroplastische Kunststoffe, wie beispielsweise Polyethylen, Polypropylen, Polystyrol, Polyester, Polyamide oder Polyvinylchlorid keinerlei diesen Kunststoff weichmachenden Verbindungen (Weichmacher) enthalten. Diese spezifischen Weichmacher sind dem Fachmann geläufig. Es handelt sich hierbei insbesondere um Diethylhexylphthalat, Dioctylphthalat und/oder Alkylsulfonsäureester des Phenols.

Im erfindungsgemäßen Verfahren wird die Klebstoffformulierung auf wenigstens eine Oberfläche des weichmacherfreien Substrats 1 in einer dem Fachmann geläufigen Art und Weise aufgebracht, beispielsweise durch Besprühen, Tauchen, Bestreichen und/oder Rakeln. Dabei wird die Klebstoffmenge so bemessen, dass sie 1 bis 100 g, bevorzugt 5 bis 50 g und insbesondere bevorzugt 10 bis 30 g, jeweils bezogen auf die Summe der Gesamtmengen an Polymer A und Aminotriazinverbindung B, pro Quadratmeter Substrat 1 beträgt. Mit Vorteil wird lediglich eine Oberfläche des Substrats 1 mit der Klebstoffformulierung beschichtet.

Im Anschluss an das Aufbringen der Klebstoffformulierung auf wenigstens eine Oberfläche des Substrats 1 kann, insbesondere dann, wenn die Klebstoffformulierung Wasser und/oder organisches Lösungsmittel enthält, gegebenenfalls ein Trocknungsschritt nachgeschaltet werden, bei welchem in einer dem Fachmann geläufigen Art und Weise, beispielsweise im Unterdruck und/oder erhöhter Temperatur, das Lösungsmittel aus der Klebstoffformulierung entfernt wird.

Die nach dem erfindungsgemäßen Verfahren erhältlichen selbstklebenden Artikel eignen sich vorteilhaft zum Bekleben von Substraten 2.

Als Substrate 2 kommen prinzipiell alle Gegenstände aus natürlichen oder synthetischen Materialien mit glatten oder angerauten Oberflächen in Betracht, wie Gegenstände aus Kunststoffen, beispielsweise Polyethylen, Polypropylen, Polystyrol, Polyester, Polyamide oder Polyvinylchlorid, Metallen, beispielsweise Aluminium, Metalllegierungen und Stähle, beispielsweise Weißblech und Buntmetalle, Nichtmetallen, beispielsweise Glas, kunststoffbeschichtetem Glas, Porzellan oder Keramik, cellulosehaltigen Materialien, beispielsweise gestrichenes oder geleimtes, bedrucktes oder unbedrucktes Papier sowie entsprechende Pappe oder Karton, wobei jedoch Gegenstände aus Kunststoffen, Metallen, Glas, kunststoffbeschichtetem Glas, Porzellan oder Keramik und insbesondere Glas, kunststoffbeschichtetem Glas, Porzellan oder Keramik als Substrat 2 bevorzugt sind.

Dabei erfolgt die Verklebung des nach dem erfindungsgemäßen Verfahren erhaltenen selbstklebenden Artikels mit einem Substrat 2 dergestalt, dass die mit Klebstoffformulierung beschichtete Oberfläche des selbstklebenden Artikels mit der Oberfläche eines Substrates 2 in Kontakt gebracht und der erhaltene Verbund aus Substrat 1, Klebstoffschicht und Substrat 2 gegebenenfalls einem Trocknungsschritt unterzogen wird.

Beim Substrat 2 handelt es sich im Falle der Kennzeichnungsetikettierung insbesondere um wieder verwendbare Gegenstände, wie Behälter, beispielsweise Getränkeflaschen aus Glas, kunststoffbeschichtetem Glas oder Kunststoff, insbesondere Polyethylenglykolterephthalat PET, wie insbesondere Wein-, Wasser-, Softdrink- oder Bierflaschen, welche nach Entleerung/Benutzung einem Reinigungsschritt unterzogen und dann wieder verwendet werden und im Falle der Preisetikettierung um Verkaufsgegenstände aus Kunststoff, Metall, Glas, kunststoffbeschichtetem Glas, Porzellan oder Keramik.

Mit besonderem Vorteil handelt es sich erfindungsgemäß beim Substrat 1 um Papieretiketten und beim Substrat 2 um Behälter, insbesondere Getränkeflaschen oder um Verkaufsgegenstände. Enthält die Klebstoffformulierung auf dem Papieretikett noch Wasser und/oder organisches Lösungsmittel, so erfolgt nach der Verklebung des Papieretiketts mit dem entsprechenden Substrat 2 in der Regel noch ein Trocknungsschritt. Enthält die Klebstoffformulierung ausschließlich Wasser, so genügt es in der Regel, die Klebstoffformulierung der etikettierten Substrate 2 unter den gegebenen Umgebungsbedingungen (Lagerhalle) austrocknen zu lassen. Selbstverständlich kann die Trocknung auch im Warmluftstrom erfolgen. Enthält die Klebstoffformulierung organisches Lösungsmittel, so erfolgt die Trocknung unter Recycling oder sicherer Entsorgung des organischen Lösungsmittels. Entsprechende Verfahren sind dem Fachmann geläufig.

Von Bedeutung für das erfindungsgemäße Verfahren ist weiterhin, dass die mit der Klebstoffformulierung beschichteten Substrate 1, insbesondere Papieretiketten auch sicher auf Substrate 2 aufgebracht werden können, welche eine Oberflächentemperatur $\leq 20$ °C, häufig $\leq 10$ °C und oft $\leq 0$ °C aufweisen und welche daher mit Luftfeuchtigkeit beschlagen sein können. Das erfindungsgemäße Verfahren eignet sich daher insbesondere zur industriellen Etikettierung von Getränkeflaschen.

Für die industrielle Etikettierung von Getränkeflaschen werden vorteilhaft solche wässrige Klebstoffformulierungen verwendet, welche als Aktivkomponenten neben Polymer A und Aminotriazinverbindung B lediglich noch ein

dem Fachmann geläufiges Netzmittel, insbesondere Sulfobernsteinsäure-2-ethylhexylester-Natriumsalz, in einer Menge von 0,1 bis 3 Gew.-%, bezogen auf das Polymer A, enthalten. Wässrige Klebstoffformulierung zur industriellen Etikettierung von Getränkeflaschen werden bezüglich ihres Feststoffgehalts so eingestellt, dass sie bei 20 °C eine Brookfield-Viskosität im Bereich von 50 bis 2000 mPas, vorteilhaft 80 bis 500 mPas, bestimmt nach ISO 2555, aufweisen.

Die gemäß vorgenanntem Verfahren etikettierten Gegenstände, insbesondere mit Papier etikettierte Getränkeflaschen, können in neutralem Wasser, insbesondere neutralem Trinkwasser (d.h. bei einem pH-Wert ≥ 6, bevorzugt ≥ 6,5 und ≤ 7, gemessen mit einem handelsüblichen geeichten pH-Meter bei 20 °C) bei einer Temperatur ≤ 20 °C, häufig ≤ 10 °C und oft ≤ 5 °C über mehrere Stunden oder Tage gelagert werden, ohne dass sich das Etikett ablöst.

Von Bedeutung für erfindungsgemäße Verbunde aus einem Substrat 1, einer Klebstoffschicht und einem Substrat 2, insbesondere dann, wenn es sich bei Substrat 1 um Papier handelt, ist, dass sie auch die Anforderungen an eine Seewasserfestigkeit gemäß British Standard BS 5609, 'Section Marine Exposure' erfüllen.

Erfindungsgemäß vorteilhaft lassen sich Verbunde aus einem Substrat 1, einer Klebstoffschicht und einem Substrat 2, insbesondere dann, wenn es sich bei Substrat 1 um Papier handelt, wieder lösen, wenn der Verbund bei einer Temperatur ≥ 50 °C mit einem wässrigen Medium, welches einen pH-Wert ≥ 7,5, vorteilhaft einen pH-Wert ≥ 8 und ≤ 14 und insbesondere vorteilhaft einen pH-Wert ≥ 8,5 und ≤ 10 (gemessen bei 20 °C) aufweist, behandelt wird. Vorteilhaft erfolgt das Lösen des Verbundes in einem Temperaturbereich ≥ 60 und ≤ 80 °C und insbesondere vorteilhaft im Bereich ≥ 65 und ≤ 75 °C.

Die Einstellung des pH-Wertes des wässrigen Mediums ist dem Fachmann geläufig und erfolgt insbesondere durch Zugabe von basischen Verbindungen, wie Alkali- oder Erdalkalimetallhydroxide, beispielsweise Natriumhydroxid, Kaliumhydroxid oder Kalziumhydroxid, oder Aminverbindungen, beispielsweise Alkanolaminverbindungen, wie Ethanolamin, Diethanolamin oder Triethanolamin. Dabei erfolgt die Messung des pH-Wertes mittels eines handelsüblichen geeichten pH-Meters bei 20 °C.

Von Bedeutung ist, dass das wässrige Lösemedium neben der basischen Verbindung zum Einstellen des pH-Wertes noch dem Fachmann geläufige übliche Additive, wie beispielsweise Schaumdämpfer, oberflächenaktive Verbindungen oder Biozide enthalten kann.

Das Lösen des Verbundes aus einem Substrat 1, einer Klebstoffschicht und einem Substrat 2, insbesondere dann, wenn es sich bei Substrat 1 um Papier handelt, erfolgt unter den vorgenannten Bedingungen rasch, in der Regel innerhalb 15 Minuten, bevorzugt innerhalb von 5 Minuten und insbesondere bevorzugt innerhalb von 1 Minute, weshalb das Lösen bevorzugt auch unter industriellen Reinigungsbedingen durchgeführt werden kann.

Handelt es sich daher bei den Verbunden beispielsweise um mit Papieretiketten verklebten Getränkeflaschen aus Glas, kunststoffbeschichtetem Glas, oder Kunststoff oder um Verkaufsgegenstände aus Kunststoffen, Metallen, Glas, kunststoffbeschichtetem Glas, Porzellan oder Keramik, so lassen sich die Papieretiketten nach dem erfindungsgemäßen Verfahren vorteilhaft wieder rückstandsfrei von den Getränkeflaschen bzw. Verkaufsgegenständen ablösen.

Die Erfindung soll anhand von nachfolgendem, nicht einschränkendem Beispiel erläutert werden.

Beispiel:

Als Klebstoff wurde eine 67 gew.-%ige wässrige Polymerisatdispersion auf Basis von 2-Ethylhexylacrylat und Acrylsäure, mit einer Glasübergangstemperatur des Polymerisats von - 56 °C (Acronal® V 115 der BASF SE) eingesetzt. Zu 100 Gew.-Teilen dieser wässrigen Polymerisatdispersion wurden 1 Gew.-Teil einer 70 gew.-%igen wässrigen Lösung einer mit Methanol veretherten Aminotriazinverbindung auf Basis von Melamin und Formaldehyd (Saduren® 163 der BASF SE) zugemischt und die erhaltenen homogene Mischung mit entionisiertem Wasser auf einen Feststoffgehalt von 50 Gew.-% verdünnt. Die erhaltene verdünnte Klebstoffmischung wird als Klebstoff A bezeichnet.

Als Vergleichsklebstoff (Klebstoff V1) wurde die wässrige Polymerisatdispersion Acronal® V 115 (ohne Saduren® 163) mit entionisiertem Wasser auf einen Feststoffgehalt von 50 Gew.-% verdünnt.

Als weiteren Vergleichsklebstoff (Klebstoff V2) wurde Colfix® Kaltleim K40/K2, ein handelsüblicher Kaltleim der Firma Kic Krones internationale Cooperationsgesellschaft mbH, eingesetzt.

Die Klebstoffe A und V1 wurden auf ein DIN A 4-Silikonpapier aufgetragen und mit einem Balkenrakel ein Nassauftragsgewicht von $40 g/m^2$ eingestellt.

Das so beschichtete Silikonpapier wurde 3 Minuten bei 90 °C getrocknet und danach bei Raumtemperatur auf ein für die Flaschenetikettierung handelsübliches DIN A 4-Etikettenpapier (Papiers Adicar WS AM Matt, der Cham Paper Group) kaschiert. Dabei wurde das mit Haftklebstoff beschichtete Silikonpapier mit einer 1 kg schweren Rolle zweimal flächig angerollt. Die erhaltenen Papierlaminate wurden anschließend für 24 Stunden in einer Klimakammer bei 23 °C und 50 % relativer Luftfeuchtigkeit gelagert. Daran anschließend wurden aus den erhaltenen Papierlaminaten bei Raumtemperatur 10 x 5 cm große Streifen geschnitten, von diesen Streifen das Silikonpapier abgezogen und die erhaltenen beschichteten Papieretiketten auf eine fettfreie, 20 x 10 cm große Glasplatte geklebt und mit einer 1 kg schweren Rolle zweimal flächig angerollt. Die dabei erhaltenen Papier/Klebstoff/Glas-Verbunde wurden anschließend ebenfalls für 24 Stunden in einer Klimakammer bei 23 °C und 50 % relativer Luftfeuchtigkeit gelagert.

In einem weiteren Versuch wurde eine wie zuvor beschriebene fettfreie Glasplatte auf einer Fläche von 10 x 5 cm mit dem handelsüblichen Klebstoff V2 beschichtet, wobei die Auftragsmenge 20 g/$m^2$ betrug. Auf diese Klebefläche wurden dann 10 x 5 cm große Papierstreifen des vorgenannten, klebstofffreien Etikettenpapiers (Papiers Adicar WS AM Matt, der Cham Paper Group) aufgebracht und dieses mit einer 1 kg schweren Rolle zweimal flächig angerollt. Der dabei erhaltene Papier/Klebstoff/Glas-Verbund wurde anschließend ebenfalls für 24 Stunden in einer Klimakammer bei 23 °C und 50 % relativer Luftfeuchtigkeit gelagert.

Mit den erhaltenen Papier/Klebstoff/Glas-Verbunden wurden folgende anwendungstechnische Untersuchungen durchgeführt.

Die erhaltenen Papier/Klebstoff/Glas-Verbunde wurden senkrecht und vollständig in eine bewegte Waschflüssigkeit getaucht und die Zeit gemessen, innerhalb sich derer die Papieretiketten von den Glasflächen ablösen. Dabei wurde ein Versuch umso besser bewertet, je rascher und je rückstandsfreier die Ablösung von der Glasplatte erfolgte.

Als Waschflüssigkeiten wurden sowohl eine 1,5 gew.-% wässrige Lösung von Natriumhydroxid mit einer Temperatur von 70 °C (Waschflüssigkeit 1) wie auch Trinkwasser mit einer Temperatur von 2 °C (Waschflüssigkeit 2) eingesetzt.

Es wurden Testreihen von jeweils 5 Papier/Klebstoff/Glas-Verbunden pro Klebstoff und pro Waschflüssigkeit durchgeführt. Die dabei in nachfolgender Tabelle aufgelisteten Ergebnisse stellen die Mittelwerte der in der jeweiligen Testreihe durchgeführten Versuche dar, wobei die Tests mit Waschflüssigkeit 2 nach 24 Stunden abgebrochen wurden.

| | Waschflüssigkeit 1 | | Waschflüssigkeit 2 | |
|---|---|---|---|---|
| Klebstoff | Ablösezeit | Ablösung | Ablösezeit | Ablösung |
| A | 22 Sekunden | rückstandsfrei | > 24 Stunden | - |
| V1 | 312 Sekunden | Klebstoffreste | > 24 Stunden | - |
| V2 | 24 Sekunden | rückstandsfrei | 118 Minuten | rückstandsfrei |

## Patentansprüche

1. Verfahren zum Lösen eines Verbundes aus Substrat 1 und Substrat 2, **dadurch gekennzeichnet, dass** der Verbund mit einem wässrigen Medium, welches eine Temperatur ≥ 50 °C und einen pH-Wert ≥ 7,5 aufweist, behandelt wird, wobei der Verbund erhältlich ist durch ein Verfahren zum Verkleben eines selbstklebenden Artikels, wobei die mit Klebstoffformulierung beschichtete Oberfläche des selbstklebenden Artikels mit der Oberfläche eines Substrates 2 in Kontakt gebracht wird und wobei der selbstklebende Artikel erhältlich ist durch ein Verfahren, das **dadurch gekennzeichnet ist, dass** wenigstens eine Oberfläche eines weichmacherfreien Substrats 1 mit einer Klebstoffformulierung, enthaltend

   A) ein durch radikalische Polymerisation erhältliches Polymer A mit einer Glasübergangstemperatur ≤ -40 °C (gemessen mittels Differential Scanning Calorimetry, midpoint-Messung, 20 K/min gemäß DIN 53765), welches zu

   0,1 bis 15 Gew.-% wenigstens eine ethylenisch ungesättigte $C_3$- bis $C_6$-Mono- oder Dicarbonsäure, deren Amid und/oder ein ethylenisch ungesättigtes Monomer, welches wenigstens eine Hydroxyl- oder Aminogruppe enthält (Monomere A1) und
   85 bis 99,9 Gew.-% wenigstens ein weiteres, mit dem wenigstens einen Monomeren A1 radikalisch copolymerisierbares ethylenisch ungesättigtes Monomer (Monomere A2)

   in einpolymerisierter Form enthält, wobei sich die Mengen der Monomeren A1 und A2 zu 100 Gew.-% addieren, und
   B) ≥ 0,01 und ≤ 3 Gew.-Teile einer Aminotriazinverbindung B, bezogen auf 100 Gew.-Teile an Polymer A.

   beschichtet wird und wobei als Substrat 1 Papier eingesetzt wird.

2. Verfahren nach Anspruch 1, **dadurch gekennzeichnet, dass** das Polymer A zu ≥ 80 Gew.-% aus $C_1$- bis $C_{20}$-Alkylacrylaten und/oder -methacrylaten in einpolymerisierter Form aufgebaut ist.

3. Verfahren nach Anspruch 1 oder 2, **dadurch gekennzeichnet, dass** das Polymer A zu ≥ 85 Gew.-% aus 2-Ethylhexylacrylat, ≥ 0,1 und ≤ 10 Gew.-% Vinylacetat und ≥ 0,1 und ≤ 5 Gew.-% Acrylsäure in einpolymerisierter Form aufgebaut ist.

4. Verfahren nach einem der Ansprüche 1 bis 3, **dadurch gekennzeichnet, dass** das Polymer A eine Glasübergangstemperatur ≤ -50 °C (gemessen mittels Differential Scanning Calorimetry, midpoint-Messung, 20 K/min gemäß DIN 53765) aufweist.

5. Verfahren nach einem der Ansprüche 1 bis 4, **dadurch gekennzeichnet, dass** als Aminotriazinverbindung B Melaminharz eingesetzt wird.

6. Verfahren nach einem der Ansprüche 1 bis 5, **dadurch gekennzeichnet, dass** die Aminogruppen der Aminotriazinverbindung B im Mittel mit wenigstens 1 Mol Formaldehyd methyloliert sind.

7. Verfahren nach einem der Ansprüche 1 bis 6, **dadurch gekennzeichnet, dass** die Klebstoffmenge 10 bis 30 g, bezogen auf die Summe der Gesamtmengen an Polymer A und Aminotriazinverbindung B, pro Quadratmeter Substrat 1 beträgt.

8. Verfahren nach Anspruch 7, **dadurch gekennzeichnet, dass** als Substrat 2 ein Gegenstand aus Kunststoff, Glas, kunststoffbeschichtetes Glas, Metall, Porzellan oder Keramik eingesetzt wird.

**Claims**

1. A method of parting a bonded assembly of substrate 1 and substrate 2, which comprises treating the assembly with an aqueous medium which has a temperature ≥ 50°C and a pH ≥ 7.5, the assembly being obtainable by a method of adhesively bonding a self-adhesive article, where the surface of the self-adhesive article that is coated with adhesive formulation is contacted with the surface of a substrate 2 and where the self-adhesive article is obtainable by a method which comprises coating at least one surface of a plasticizer-free substrate 1 with an adhesive formulation comprising

   A) a polymer A obtainable by free-radical polymerization, having a glass transition temperature ≤ -40°C (measured by means of Differential Scanning Calorimetry, midpointmeasurement, 20 K/min according to DIN 53765), and comprising in copolymerized form

      0.1% to 15% by weight of at least one ethylenically unsaturated $C_3$ to $C_6$ monocarboxylic or dicarboxylic acid, the amide thereof and/or an ethylenically unsaturated monomer which comprises at least one hydroxyl or amino group (monomers A1) and
      85% to 99.9% by weight of at least one further ethylenically unsaturated monomer (monomers A2) free-radically copolymerizable with the at least one monomer A1,

   the amounts of monomers A1 and A2 adding to 100% by weight, and
   B) ≥ 0.01 and ≤ 3 parts by weight of an aminotriazine compound B, based on 100 parts by weight of polymer A, and paper being used as substrate 1.

2. The method according to claim 1, wherein the polymer A is composed of ≥ 80% by weight of $C_1$ to $C_{20}$ alkyl acrylates and/or methacrylates in copolymerized form.

3. The method according to claim 1 or 2, wherein the polymer A is composed of ≥ 85% by weight of 2-ethylhexyl acrylate, ≥ 0.1% and ≤ 10% by weight of vinyl acetate, and ≥ 0.1% and ≤ 5% by weight of acrylic acid, in copolymerized form.

4. The method according to any one of claims 1 to 3, wherein the polymer A has a glass transition temperature ≤ -50°C (measured by means of Differential Scanning Calorimetry, midpoint-measurement, 20 K/min according to DIN 53765).

5. The method according to any one of claims 1 to 4, wherein melamine resin is used as aminotriazine compound B.

6. The method according to any one of claims 1 to 5, wherein the amino groups of the aminotriazine compound B are methylolated on average with at least 1 mol of formaldehyde.

7. The method according to any one of claims 1 to 6, wherein the amount of adhesive is 10 to 30 g, based on the sum

of the total amounts of polymer A and aminotriazine compound B, per square meter of substrate 1.

**8.** The method according to claim 7, wherein an article made of plastic, glass, plastic-coated glass, metal, porcelain or ceramic is used as substrate 2.

## Revendications

**1.** Procédé de détachement d'un composite constitué d'un substrat 1 et d'un substrat 2, **caractérisé en ce que** le composite est traité avec un milieu aqueux qui présente une température ≥ 50 °C et un pH ≥ 7,5, le composite pouvant être obtenu par un procédé de collage d'un article autocollant, la surface revêtue avec une formulation adhésive de l'article autocollant étant mise en contact avec la surface d'un substrat 2, et l'article autocollant pouvant être obtenu par un procédé qui est **caractérisé en ce qu'**au moins une surface d'un substrat 1 sans plastifiant est revêtue avec une formulation adhésive, contenant

A) un polymère A pouvant être obtenu par polymérisation radicalaire, ayant une température de transition vitreuse ≤ -40 °C (mesurée par calorimétrie à balayage différentiel, mesure au point milieu, 20 K/minute selon DIN 53765), qui contient
0,1 à 15 % en poids d'au moins un acide mono- ou dicarboxylique en $C_3$ à $C_6$ éthyléniquement insaturé, son amide et/ou d'un monomère éthyléniquement insaturé qui contient au moins un groupe hydroxyle ou amino (monomères A1), et
85 à 99,9 % en poids d'au moins un autre monomère éthyléniquement insaturé, copolymérisable par voie radicalaire avec ledit au moins un monomère A1 (monomères A2),
sous forme copolymérisée, la somme des quantités des monomères A1 et A2 étant 100 % en poids, et
B) ≥ 0,01 et ≤ 3 parties en poids d'un composé d'aminotriazine B, par rapport à 100 parties en poids de polymère A,

et du papier étant utilisé en tant que substrat 1.

**2.** Procédé selon la revendication 1, **caractérisé en ce que** le polymère A est constitué par ≥ 80 % en poids d'acrylates et/ou de méthacrylates d'alkyle en $C_1$ à $C_{20}$ sous forme copolymérisée.

**3.** Procédé selon la revendication 1 ou 2, **caractérisé en ce que** le polymère A est constitué par ≥ 85 % en poids d'acrylate de 2-éthylhexyle, ≥ 0,1 et ≤ 10 % en poids d'acétate de vinyle et ≥ 0,1 et ≤ 5 % en poids d'acide acrylique sous forme copolymérisée.

**4.** Procédé selon l'une quelconque des revendications 1 à 3, **caractérisé en ce que** le polymère A présente une température de transition vitreuse ≤ -50 °C (mesurée par calorimétrie à balayage différentiel, mesure au point milieu, 20 K/minute selon DIN 53765).

**5.** Procédé selon l'une quelconque des revendications 1 à 4, **caractérisé en ce qu'**une résine de mélamine est utilisée en tant que composé d'aminotriazine B.

**6.** Procédé selon l'une quelconque des revendications 1 à 5, **caractérisé en ce que** les groupes amino du composé d'aminotriazine B sont méthylolés avec au moins 1 mole de formaldéhyde.

**7.** Procédé selon l'une quelconque des revendications 1 à 6, **caractérisé en ce que** la quantité d'adhésif est de 10 à 30 g, par rapport à la somme des quantités totales de polymère A et de composé d'aminotriazine B, par mètre carré de substrat 1.

**8.** Procédé selon la revendication 7, **caractérisé en ce qu'**un article en plastique, verre, verre revêtu de plastique, métal, porcelaine ou céramique est utilisé en tant que substrat 2.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1329492 A
- EP 1479744 A
- DE 10208039 A
- US 5183841 A
- DE 4426186 A
- EP 1520898 A
- DE 4003422 A
- US 4269749 A


### In der Beschreibung aufgeführte Nicht-Patentliteratur


- **G. KANIG.** *Kolloid-Zeitschrift & Zeitschrift für Polymere,* vol. 190, 1
- **T.G. FOX.** *Bull. Am. Phys. Soc.,* 1956, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- Encyclopedia of Polymer Science and Engineering. 1987, vol. 8, 659
- **D.C. BLACKLEY.** *High Polymer Latices,* 1966, vol. 1, 35
- **H. WARSON.** *The Applications of Synthetic Resin Emulsions,* 1972, 246
- **D. DIEDERICH.** *Chemie in unserer,* 1990, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, 411-420
- Methoden der organischen Chemie. **HOUBEN-WEYL.** Makromolekulare Stoffe. Georg-Thieme-Verlag, 1961, 192-208
- *Tackifier sind beispielsweise aus Adäsive Age,* Juli 1987, 19-23
- *Polym. Mater. Sci. Eng.,* 1989, vol. 61, 588-592